# EUROPEAN PATENT SPECIFICATION

(11) **EP 2 687 426 B1**
(45) Date of publication and mention of the grant of the patent: **01.03.2017**
(21) Application number: 12757153.7
(22) Date of filing: 13.03.2012
(51) Int. Cl.: B62D 21/11, B60G 7/02

(54) **SUSPENSION FRAME STRUCTURE**
AUFHÄNGUNGSRAHMENSTRUKTUR
STRUCTURE DE CADRE DE SUSPENSION

(30) Priority: 16.03.2011 JP 2011058290
(43) Date of publication of application: 22.01.2014
(73) Proprietor: Futaba Industrial Co. Ltd., Aichi 444-8558 (JP)
(72) Inventor: INAGAKI, Takashi, Okazaki-shi Aichi 444-8558 (JP)
(74) Representative: Johnson, Carrie-Anne Louise
(86) International application number: PCT/JP2012/056417
(87) International publication number: WO 2012/124692

(56) References cited:
- DE-A1-102007 012 148
- DE-U1-202006 020 635
- JP-A- 6 115 457
- JP-A- 8 099 650
- JP-A- 2001 106 116
- JP-A- 2002 127 935
- JP-A- 2006 281 953
- JP-A- 2010 137 736
- JP-A- 2011 126 365
- JP-U- H0 459 578
- JP-U- 62 112 975
- US-A1- 2007 278 778

## Description

### TECHNICAL FIELD

The present invention relates to a suspension frame structure in which left and right lower arms are supported by a member body.

### BACKGROUND ART

In a suspension frame structure described in Patent Document 1, an upper plate and a lower plate are overlapped with each other to form a member body having a hollow therein. On left and right sides of a front side of the member body, front-side supporting portions of left and right lower arms are supported in a state where axial directions of the front-side supporting portions are arranged to be in a front-back direction. On left and right sides of a rear side of the member body, rear-side supporting portions of the lower arms are supported in a state where axial directions of the rear-side supporting portions are arranged to be in a vertical direction. Moreover, in this suspension frame structure, in order to mount the member body to a vehicle body, left and right vehicle body mounting members extending from the member body toward the vehicle body are provided on the member body at respective positions in the vicinity of supporting positions of the front-side supporting portions of the left and right lower arms.

Document DE 20 2006 020 635 U1 discloses a suspension frame structure according to the preamble of independent claim 1.

### PRIOR ART DOCUMENTS

### PATENT DOCUMENTS

Patent Document 1: Japanese Unexamined Patent Application Publication No. 2008-1307

### SUMMARY OF THE INVENTION

### PROBLEMS TO BE SOLVED BY THE INVENTION

However, in the suspension frame structure described in Patent Document 1, the member body is mounted to a vehicle body via the vehicle body mounting members, and the lower arms are supported by the member body. Consequently, the following problems have arisen: it is difficult to ensure accuracy of mounting positions, which are for mounting to the vehicle body, of the front-side supporting portions of the left and right lower arms; and since force acting on the lower arms is transmitted to the vehicle body via the member body and the vehicle body mounting members, it is difficult to secure stiffness.

Moreover, in mounting the vehicle body mounting members to the member body, since the vehicle body mounting members have been mounted to the upper plate of the member body, a problem arises in which welding is complicated, resulting in low productivity.

In one aspect of the present invention, it is desired to provide a suspension frame structure, with which accuracy of mounting positions and stiffness can be easily secured and productivity can be increased.

### MEANS FOR SOLVING THE PROBLEMS

A suspension frame structure according to the present invention has the following configuration: the suspension frame structure includes a member body and lower arms respectively provided on a left side and a right side of the member body; the lower arms respectively provided on the left side and the right side include respective front-side supporting portions that are supported, respectively, on a left side and a right side of a front side of the member body in a state where axial directions of the front-side supporting portions are arranged to be in a front-back direction, and include respective rear-side supporting portions that are supported, respectively, on a left side and a right side of a rear side of the member body; and the front-side supporting portions of the lower arms are supported by respective vehicle body mounting members respectively mounted on the left side and the right side of the front side of the member body, in the state where the axial directions of the front-side supporting portions are arranged to be in the front-back direction.

It is configured such that each of the vehicle body mounting members includes a first vehicle body mounting member and a second vehicle body mounting member, both of which extend from the member body toward a side of a vehicle body; the first vehicle body mounting member includes a supporting plate portion facing one end of the front-side supporting portion of the lower arm in the axial direction of the front-side supporting portion, a vertical plate portion provided along the axial direction of the front-side supporting portion, and a mounting plate portion formed by bending an end part of the vertical plate portion on a side of the vehicle body and adapted to be mounted to the vehicle body; the second vehicle body mounting member includes a supporting plate portion facing the other end of the front-side supporting portion of the lower arm in the axial direction of the front-side supporting portion and formed along the vertical plate portion of the first vehicle body mounting member, and a mounting plate portion formed by bending an end part of the supporting plate portion on a side of the vehicle body and adapted to be mounted to the vehicle body; and the supporting plate portion of the first vehicle body mounting member and the supporting plate portion of the second vehicle body mounting member are configured to support the front-side supporting portion of the lower arm.

Moreover, the second vehicle body mounting member may include a flange portion that is formed by bending both sides of the supporting plate portion of the second vehicle body mounting member toward a side opposite to a side of the front-side supporting portion of the lower arm. Furthermore, the vehicle body mounting member may linearly extend from the member body toward a side of the vehicle body. It may be configured such that the mounting plate portion of the first vehicle body mounting member and the mounting plate portion of the second vehicle body mounting member are overlapped with each other. Alternatively, it may be configured such that an interposed member is provided between the mounting plate portion of the first vehicle body mounting member and the mounting plate portion of the second vehicle body mounting member.

### EFFECTS OF THE INVENTION

In the suspension frame structure of the present invention, the left and right vehicle body mounting members are respectively mounted on the left side and the right side of the front side of the member body, and the front-side supporting portions of the left and right lower arms are supported by the respective left and right vehicle body mounting members in the state where the axial directions of the front-side supporting portions are arranged to be in the front-back direction. Therefore, the suspension frame structure of the present invention can exhibit the following effects: accuracy of mounting positions and stiffness can be easily secured; and productivity can be increased.

Moreover, in a configuration where the vehicle body mounting member includes the first vehicle body mounting member and the second vehicle body mounting member, which extend from the member body toward the side of a vehicle body, press forming can be easily performed, thereby improving productivity. Furthermore, in a configuration where the second vehicle body mounting member includes the flange portion formed by bending the both sides of the supporting plate portion toward the side opposite to the side of the front-side supporting portion of the lower arm, stiffness can be further improved. Moreover, with a configuration in which the vehicle body mounting member linearly extends from the member body toward the side of the vehicle body, stiffness can be further improved.

### BRIEF DESCRIPTION OF THE DRAWINGS

FIG. 1 is a perspective view of a suspension frame structure according to one embodiment of the present invention with lower arms mounted thereto.
FIG. 2 is an enlarged plan view of the suspension frame structure shown in FIG. 1.
FIG. 3 is an enlarged front view of the suspension frame structure shown in FIG. 1.
FIG. 4 is an enlarged view of the suspension frame structure shown in FIG. 1, when viewed from an arrow A in FIG. 1.
FIG. 5 is an enlarged cross-sectional view of the suspension frame structure shown in FIG. 4, taken along a line IV-IV in FIG. 4.
FIG. 6 is a perspective view of a vehicle body mounting member of another embodiment.

### EXPLANATION OF REFERENCE NUMERALS

1...member body, 2...upper plate, 4...lower plate, 6,8...vehicle body mounting member, 10,12...front-side arm mounting portion, 14,16...rear-side arm mounting portion, 18,20...lower arm, 18b,20b...front-side supporting portion, 18c,20c...rear-side supporting portion, 22... supporting shaft, 24,34..first vehicle body mounting member, 24a...supporting plate portion, 24b...vertical plate portion, 24c...mounting plate portion, 24d...flange portion, 25,27...through hole, 26,36...second vehicle body mounting member, 26a...supporting plate portion, 26b...flange portion, 26c...mounting plate portion, 31...interposed member

### MODE FOR CARRYING OUT THE INVENTION

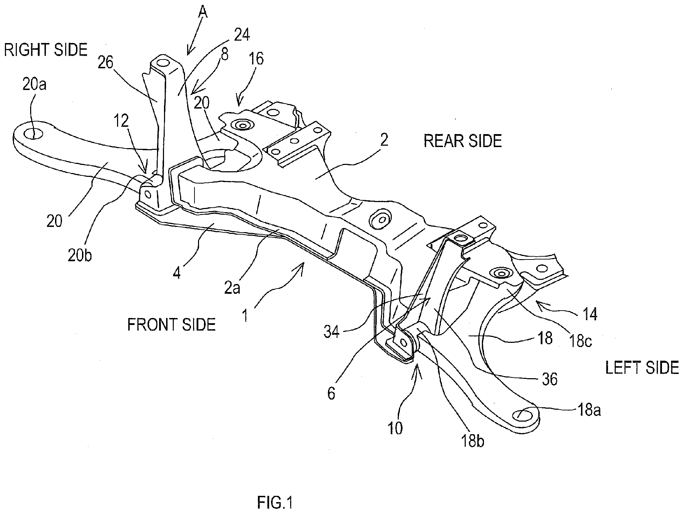

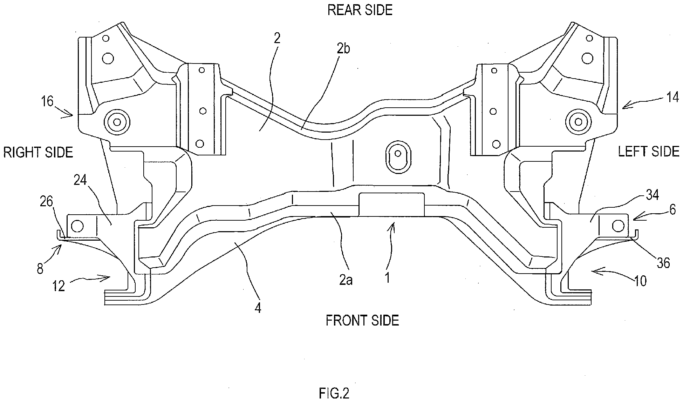

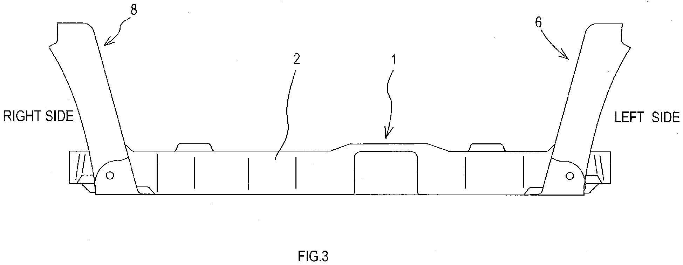

Hereinafter, an embodiment for carrying out the present invention will be described in detail with reference to the drawings. As shown in FIGS. 1 to 3, reference numeral 1 indicates a member body. The member body 1 is formed by overlapping an upper plate 2 and a lower plate 4 vertically with each other. The upper plate 2 and the lower plate 4 are both formed by pressing. The upper plate 2 has flange parts 2a and 2b horizontally formed on a front side and a rear side, respectively, of a vehicle.

In the present embodiment, the lower plate 4 is formed by pressing into a shape of an approximately flat plate, which is substantially flat throughout. The flange parts 2a and 2b of the upper plate 2 are overlapped with and fixed by welding to the lower plate 4. An inner part of a body formed by overlapping the upper plate 2 and the lower plate 4 with each other is hollow, and such a formed body has a closed cross-section on the front side and the rear side of the vehicle.

In the member body 1, a pair of left and right vehicle body mounting members 6 and 8 are provided, respectively, on left and right sides of a front side of the member body 1 so as to extend upwardly toward a vehicle body (not shown). The pair of left and right vehicle body mounting members 6 and 8 are, respectively, provided with front-side arm mounting portions 10 and 12. Moreover, the vehicle body mounting members 6 and 8 are, respectively, provided with rear-side arm mounting portions 14 and 16 on left and right ends of a rear side of the member body 1.

In the front-side arm mounting portions 10 and 12, respective front-side supporting portions 18b and 20b of a pair of left and right lower arms 18 and 20 are swingably supported about respective shafts arranged in an approximately front-back direction. In the rear-side arm mounting portions 14 and 16, respective rear-side supporting portions 18c and 20c of the pair of left and right lower arms 18 and 20 are provided. The rear-side supporting portions 18c and 20c are swingably supported about respective vertical shafts via rubber bushings (not shown). Mounted into respective mounting holes 18a and 20a of the pair of left and right lower arms 18 and 20 are knuckles that rotatably support wheels (not shown) via ball joints (not shown).

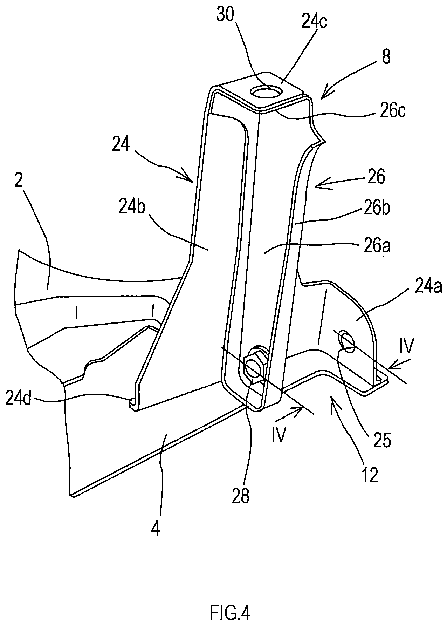

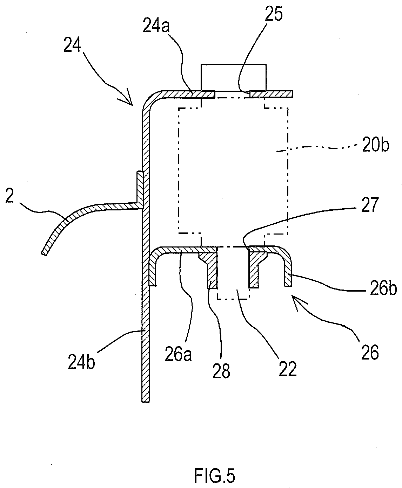

The right front-side arm mounting portion 12 is formed in the right vehicle body mounting member 8. As shown in FIGS. 4 and 5, the front-side supporting portion 20b of the right lower arm 20 is swingably supported about a supporting shaft 22 arranged in an approximately front-back direction, via a rubber bushing (not shown).

The right vehicle body mounting member 8 includes a first vehicle body mounting member 24 and a second vehicle body mounting member 26, both of which are formed by pressing. The first vehicle body mounting member 24 includes a supporting plate portion 24a facing one end in an axial direction of the front-side supporting portion 20b of the lower arm 20 and being substantially orthogonal to the supporting shaft 22. Formed in the supporting plate portion 24a is a through hole 25 through which the supporting shaft 22 is to be inserted. Here, the axial direction of the front-side supporting portion 20b of the lower arm 20 is referred to a direction along the supporting shaft 22.

Moreover, in the present embodiment, the first vehicle body mounting member 24 includes a vertical plate portion 24b provided along an axial direction of the supporting shaft 22. The vertical plate portion 24b is formed by bending to form a substantially right angle with the supporting plate portion 24a. The vertical plate portion 24b extends in a substantially linear manner toward a vehicle body (not shown). Furthermore, the first vehicle body mounting member 24 includes a mounting plate portion 24c. The mounting plate portion 24c is formed by bending an end part, which is on a side of a vehicle body, of the vertical plate portion 24b so as to be mounted to the vehicle body. A lower end of each of the supporting plate portion 24a and the vertical plate portion 24b is bent to be parallel to the lower plate 4, thereby forming a flange portion 24d. The flange portion 24d is fixed to the lower plate 4 by welding.

The second vehicle body mounting member 26 includes a supporting plate portion 26a facing the other end in the axial direction of the front-side supporting portion 20b of the lower arm 20 and being substantially orthogonal to the supporting shaft 22. The supporting plate portion 26a is substantially orthogonal to the vertical plate portion 24b of the first vehicle body mounting member 24, and extends along the vertical plate portion 24b toward the vehicle body. The supporting plate portion 26a is faced to the supporting plate portion 24a of the first vehicle body mounting member 24. In the supporting plate portion 26a, a through hole 27 is bored to be coaxial with the through hole 25 of the supporting plate portion 24a. A nut 28 is attached to the supporting plate portion 26a.

The second vehicle body mounting member 26 includes a flange portion 26b. The flange portion 26b is formed along a periphery of the supporting plate portion 26a such that the flange portion 26b is bent toward a side opposite to a side where the supporting plate portion 24a of the first vehicle body mounting member 24 is provided so as to be parallel to the vertical plate portion 24b of the first vehicle body mounting member 24.

Moreover, the second vehicle body mounting member 26 includes a mounting plate portion 26c. The mounting plate portion 26c is formed by bending an end part, which is on a side of the vehicle body, of the supporting plate portion 26a of the second vehicle body mounting member 26. The mounting plate portion 26c is directly overlapped with an underside of the mounting plate portion 24c of the first vehicle body mounting member 24, so as to be mounted to a vehicle body. In each of the mounting plate portion 24c of the first vehicle body mounting member 24 and the mounting plate portion 26c of the second vehicle body mounting member 26, a mounting hole 30 to be used for mounting to a vehicle body is provided. To achieve mounting to a vehicle body, a bolt, etc., is inserted through the mounting hole 30 to fasten the mounting plate portions 24c and 26c together, thereby providing increased stiffness.

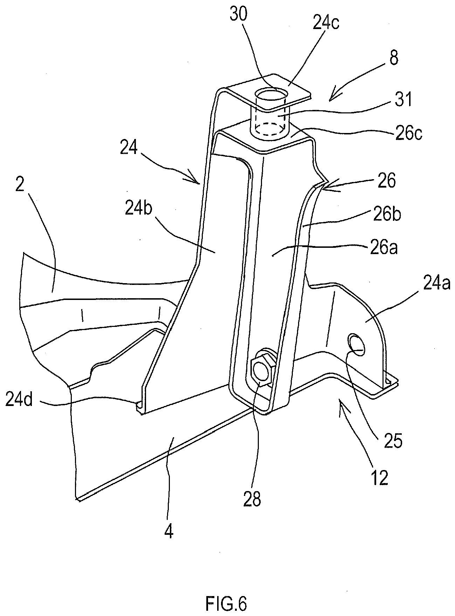

In the above-described embodiment, it is configured such that the mounting plate portion 24c of the first vehicle body mounting member 24 and the mounting plate portion 26c of the second vehicle body mounting member 26 are directly overlapped with each other. However, the present invention should not be limited to this configuration. As shown in FIG. 6, it may be configured such that a space is provided between the mounting plate portion 24c of the first vehicle body mounting member 24 and the mounting plate portion 26c of the second vehicle body mounting member 26 so as to interpose an interposed member 31 having a tubular shape between the mounting plate portions 24c and 26c. With this configuration, stiffness when mounted to a vehicle body can be increased.

The second vehicle body mounting member 26 is fixed to the lower plate 4 such that a lower part of the flange portion 26b is overlapped with and fixed by welding to the lower plate 4. Moreover, the flange portion 26b of the second vehicle body mounting member 26 is in contact with the vertical plate portion 24b of the first vehicle body mounting member 24 and fixed by welding to the vertical plate portion 24b.

The front-side supporting portion 20b of the lower arm 20 is inserted between the supporting plate portion 24a of the first vehicle body mounting member 24 and the supporting plate portion 26a of the second vehicle body mounting member 26. In a state where the front-side supporting portion 20b of the lower arm 20 is being inserted between the supporting plate portions 24a and 26a, the supporting shaft 22 is inserted through the through holes 25 and 27. Moreover, the nut 28 is screwed onto the supporting shaft 22, so that the front-side supporting portion 20b of the lower arm 20 is supported by the supporting plate portions 24a and 26a.

Here, the left vehicle body mounting member 6 and the right vehicle body mounting member 8 are symmetrical to each other. The left vehicle body mounting member 6 includes, in the same manner as in the right vehicle body mounting member 8, a first vehicle body mounting member 34 and a second vehicle body mounting member 36. The left first vehicle body mounting member 34 and the above-described right first vehicle body mounting member 24 are symmetrical to each other, and the left second vehicle body mounting member 36 and the above-described right second vehicle body mounting member 26 are symmetrical to each other. The left first vehicle body mounting member 34 and the left second vehicle body mounting member 36 have the same configurations as those of the right first vehicle body mounting member 24 and the right second vehicle body mounting member 26, respectively.

As described above, the front-side arm mounting portions 10 and 12 are, respectively, provided in the pair of left and right vehicle body mounting members 6 and 8. Thus, when mounted to a vehicle body, accuracy of mounting positions of the lower arms 18 and 20 as well as stiffness can be easily obtained. Moreover, improved productivity can be achieved.

That is to say, according to the configuration of the present embodiment, the front-side supporting portions 18b and 20b of the pair of left and right lower arms 18 and 20 are directly supported by the pair of left and right vehicle body mounting members 6 and 8 that are to be mounted to a vehicle body. For this reason, there is no accumulation of errors caused by a configuration, for example, in which a pair of left and right front-side arm mounting portions is formed in the member body 1 and a vehicle body mounting member is mounted to the member body 1. Consequently, accuracy of mounting positions can be easily secured. Moreover, stiffness can be easily obtained just by obtaining stiffness of the vehicle body mounting members 6 and 8.

Furthermore, unlike in the present embodiment, when a pair of left and right front-side arm mounting portions are formed in the member body 1 and a pair of left and right vehicle body mounting members are mounted to the member body 1, the pair of left and right front-side arm mounting portions are located close to the pair of left and right vehicle body mounting members, respectively. Therefore, it is necessary to form the pair of left and right vehicle body mounting members in a curved manner so as to avoid the pair of left and right front-side arm mounting portions. On the other hand, in the present embodiment, the front-side arm mounting portions 10 and 12 are, respectively, provided in the vehicle body mounting members 6 and 8, thereby making it possible to simplify the shape and improve productivity.

Moreover, in the present embodiment, the vehicle body mounting members 6 and 8 are provided, respectively, with the first vehicle body mounting members 34 and 24 extending from the member body 1 toward a vehicle body and, respectively, with the second vehicle body mounting members 36 and 26 extending from the member body 1 toward the vehicle body. With this configuration, press forming can be easily performed, thereby making it possible to improve productivity. In the present embodiment, since the vehicle body mounting members 6 and 8 are fixed by welding to the lower plate 4 having a flat shape, mating surfaces for welding are small. In this regard as well, excellent productivity can be obtained.

According to the configuration of the present embodiment, the through hole 25 in the first vehicle body mounting member 24 and the through hole 27 in the second vehicle body mounting member 26 can be formed by pressing. Therefore, accuracy of mounting positions can be easily obtained. Furthermore, by forming the pair of left and right vehicle body mounting members 6 and 8 in a linear manner toward a vehicle body, stiffness can be easily obtained.

As above, the present invention should not be limited to the above-described embodiments, and can be practiced in various manners without departing from the scope of the present invention.

## Claims

1. A suspension frame structure comprising:
a member body (1); and
lower arms (18, 20) respectively provided on a left side and a right side of the member body (1),
wherein the lower arms (18, 20) respectively provided on the left side and the right side include:
respective front-side supporting portions (18b, 20b) that are supported, respectively, on a left side and a right side of a front side of the member body (1) in a state where axial directions of the front-side supporting portions are arranged to be in a front-back direction; and
respective rear-side supporting portions (18c, 20c) that are supported, respectively, on a left side and a right side of a rear side of the member body (1), and,
wherein the front-side supporting portions (18b, 20b) of the lower arms (18, 20) are supported by respective vehicle body mounting members (6, 8) respectively mounted on the left side and the right side of the front side of the member body (1), in the state where the axial directions of the front-side supporting portions (18b, 20b) are arranged to be in the front-back direction,
**characterised in that** each of the vehicle body mounting members (6, 8) includes a first vehicle body mounting member (24, 34) and a second vehicle body mounting member (26, 36), both of which extend from the member body (1) toward a side of a vehicle body,
wherein the first vehicle body mounting member (24, 34) includes:
a supporting plate portion (24a) facing one end of the front-side supporting portion (18b, 20b) of the lower arm (18, 20) in the axial direction of the front-side supporting portion (18b, 20b);
a vertical plate portion (24b) provided along the axial direction of the front-side supporting portion (18b, 20b); and
a mounting plate portion (24c) formed by bending an end part of the vertical plate portion (24b) on a side of the vehicle body and adapted to be mounted to the vehicle body,
wherein the second vehicle body mounting member (26, 36) includes:
a supporting plate portion (26a) facing the other end of the front-side supporting portion (18b, 20b) of the lower arm (18, 20) in the axial direction of the front-side supporting portion (18b, 20b) and formed along the vertical plate portion (24b) of the first vehicle body mounting member (24, 34); and
a mounting plate portion (26c) formed by bending an end part of the supporting plate portion (26a) on a side of the vehicle body and adapted to be mounted to the vehicle body, and
wherein the supporting plate portion (24a) of the first vehicle body mounting member (24, 34) and the supporting plate portion (26a) of the second vehicle body mounting member (26, 36) are configured to support the front-side supporting portion (18b, 20b) of the lower arm (18, 20).

2. The suspension frame structure according to claim 1,
wherein the second vehicle body mounting member (26, 36) includes a flange portion (26b) that is formed by bending both sides of the supporting plate portion (26a) of the second vehicle body mounting member (26, 36) toward a side opposite to a side of the front-side supporting portion (18b, 20b) of the lower arm (18, 20).

3. The suspension frame structure according to claim 1 or 2,
wherein the vehicle body mounting member (6, 8) linearly extends from the member body (1) toward a side of the vehicle body.

4. The suspension frame structure according to claim 1,
wherein the mounting plate portion (24c) of the first vehicle body mounting member (24, 34) and the mounting plate portion (26c) of the second vehicle body mounting member (26, 36) are overlapped with each other.

5. The suspension frame structure according to claim 1,
wherein an interposed member (31) is provided between the mounting plate portion (24c) of the first vehicle body mounting member (24, 34) and the mounting plate portion (26c) of the second vehicle body mounting member (26, 36).

## Patentansprüche

1. Aufhängungsrahmenstruktur, die Folgendes umfasst:
einen Trägerkörper (1); und
untere Lenker (18, 20), die auf einer linken Seite bzw. einer rechten Seite des Trägerkörpers (1) vorgesehen sind,
wobei die unteren Lenker (18, 20), die auf der linken Seite bzw. der rechten Seite vorgesehen sind, Folgendes umfassen:
jeweilige vorderseitige Stützabschnitte (18b, 20b), die auf einer linken Seite bzw. einer rechten Seite einer Vorderseite des Trägerkörpers (1) in einem Zustand, in dem Axialrichtungen der vorderseitigen Stützabschnitte in einer Längsrichtung ausgerichtet sind, gestützt werden; und
jeweilige rückseitige Stützabschnitte (18c, 20c), die auf einer linken Seite bzw. einer rechten Seite einer Rückseite des Trägerkörpers (1) gestützt werden, und
wobei die vorderseitigen Stützabschnitte (18b, 20b) der unteren Lenker (18, 20) durch jeweilige auf der linken Seite bzw. der rechten Seite der Vorderseite des Trägerkörpers (1) befestigte Fahrzeugkarosseriebefestigungsglieder (6, 8) in dem Zustand, in dem Axialrichtungen der vorderseitigen Stützabschnitte (18b, 20b) in der Längsrichtung ausgerichtet sind, gestützt werden, **dadurch gekennzeichnet, dass**
jedes der Fahrzeugkarosseriebefestigungsglieder (6, 8) ein erstes Fahrzeugkarosseriebefestigungsglied (24, 34) und ein zweites Fahrzeugkarosseriebefestigungsglied (26, 36) umfasst, die sich beide von dem Trägerkörper (1) zu einer Seite einer Fahrzeugkarosserie erstrecken,
wobei das erste Fahrzeugkarosseriebefestigungsglied (24, 34) Folgendes umfasst:
einen Stützplattenabschnitt (24a), der zu einem Ende des vorderseitigen Stützabschnitts (18b, 20b) des unteren Lenkers (18, 20) in der Axialrichtung des vorderseitigen Stützabschnitts (18b, 20b) weist;
einen vertikalen Plattenabschnitt (24b), der entlang der Axialrichtung des vorderseitigen Stützabschnitts (18b, 20b) vorgesehen ist; und
einen Befestigungsplattenabschnitt (24c), der durch Biegen eines Endteils des vertikalen Plattenabschnitts (24b) auf einer Seite der Fahrzeugkarosserie ausgebildet wird und zur Befestigung an der Fahrzeugkarosserie ausgeführt ist,
wobei das zweite Fahrzeugkarosseriebefestigungsglied (26, 36) Folgendes umfasst:
einen Stützplattenabschnitt (26a), der zu dem anderen Ende des vorderseitigen Stützabschnitts (18b, 20b) des unteren Lenkers (18, 20) in der Axialrichtung des vorderseitigen Stützabschnitts (18b, 20b) weist und entlang dem vertikalen Plattenabschnitt (24b) des ersten Fahrzeugkarosseriebefestigungsglieds (24, 34) ausgebildet ist; und
einen Befestigungsplattenabschnitt (26c), der durch Biegen eines Endteils des Stützplattenabschnitts (26a) auf einer Seite der Fahrzeugkarosserie ausgebildet wird und zur Befestigung an der Fahrzeugkarosserie ausgeführt ist, und
wobei der Stützplattenabschnitt (24a) des ersten Fahrzeugkarosseriebefestigungsglieds (24, 34) und der Stützplattenabschnitt (26a) des zweiten Fahrzeugkarosseriebefestigungsglieds (26, 36) zum Stützen des vorderseitigen Stützabschnitts (18b, 20b) des unteren Lenkers (18, 20) konfiguriert sind.

2. Aufhängungsrahmenstruktur nach Anspruch 1,
wobei das zweite Fahrzeugkarosseriebefestigungsglied (26, 36) einen Flanschabschnitt (26b) umfasst, der durch Biegen beider Seiten des Stützplattenabschnitts (26a) des zweiten Fahrzeugkarosseriebefestigungsglieds (26, 36) zu einer einer Seite des vorderseitigen Stützabschnitts (18b, 20b) des unteren Lenkers (18, 20) gegenüberliegenden Seite ausgebildet wird.

3. Aufhängungsrahmenstruktur nach Anspruch 1 oder 2, wobei sich das Fahrzeugkarosseriebefestigungsglied (6, 8) linear von dem Trägerkörper (1) zu einer Seite der Fahrzeugkarosserie hin erstreckt.

4. Aufhängungsrahmenstruktur nach Anspruch 1,
wobei sich der Befestigungsplattenabschnitt (24c) des ersten Fahrzeugkarosseriebefestigungsglieds (24, 34) und der Befestigungsplattenabschnitt (26c) des zweiten Fahrzeugkarosseriebefestigungsglieds (26, 36) überlagern.

5. Aufhängungsrahmenstruktur nach Anspruch 1,
wobei ein Zwischenglied (31) zwischen dem Befestigungsplattenabschnitt (24c) des ersten Fahrzeugkarosseriebefestigungsglieds (24, 34) und dem Befestigungsplattenabschnitt (26c) des zweiten Fahrzeugkarosseriebefestigungsglieds (26, 36) vorgesehen ist.

## Revendications

1. Structure de cadre de suspension, comprenant :
un corps d'organe (1) ; et
des bras inférieurs (18, 20) prévus respectivement sur un côté gauche et un côté droit du corps d'organe (1),
les bras inférieurs (18, 20) respectivement prévus sur le côté gauche et le côté droit comportant :
des portions de support côté avant respectives (18b, 20b) qui sont supportées, respectivement, sur un côté gauche et un côté droit d'un côté avant du corps d'organe (1) dans un état dans lequel des directions axiales des portions de support côté avant sont orientées suivant une direction avant-arrière ; et
des portions de support côté arrière respectives (18c, 20c) qui sont supportées, respectivement, sur un côté gauche et un côté droit d'un côté arrière du corps d'organe (1), et
les portions de support côté avant (18b, 20b) des bras inférieurs (18, 20) étant supportées par des organes de montage respectifs (6, 8) sur la caisse du véhicule montés respectivement sur le côté gauche et le côté droit du côté avant du corps d'organe (1), dans l'état dans lequel les directions axiales des portions de support côté avant (18b, 20b) sont orientées suivant la direction avant-arrière,
**caractérisée en ce que**
chacun des organes de montage (6, 8) sur la caisse du véhicule comporte un premier organe de montage (24, 34) sur la caisse du véhicule et un deuxième organe de montage (26, 36) sur la caisse du véhicule, tous deux s'étendant depuis le corps d'organe (1) vers un côté d'une caisse de véhicule,
le premier organe de montage (24, 34) sur la caisse du véhicule comportant :
une portion de plaque de support (24a) faisant face à une extrémité de la portion de support côté avant (18b, 20b) du bras inférieur (18, 20) dans la direction axiale de la portion de support côté avant (18b, 20b) ;
une portion de plaque verticale (24b) prévue le long de la direction axiale de la portion de support côté avant (18b, 20b) ; et
une portion de plaque de montage (24c) formée par cintrage d'une portion d'extrémité de la portion de plaque verticale (24b) sur un côté de la caisse du véhicule et apte à être montée sur la caisse du véhicule,
le deuxième organe de montage (26, 36) sur la caisse du véhicule comportant :
une portion de plaque de support (26a) faisant face à l'autre extrémité de la portion de support côté avant (18b, 20b) du bras inférieur (18, 20) dans la direction axiale de la portion de support côté avant (18b, 20b) et formée le long de la portion de plaque verticale (24b) du premier organe de montage (24, 34) sur la caisse du véhicule ; et
une portion de plaque de montage (26c) formée par cintrage d'une portion d'extrémité de la portion de plaque de support (26a) sur un côté de la caisse du véhicule et apte à être montée sur la caisse du véhicule, et
la portion de plaque de support (24a) du premier organe de montage (24, 34) sur la caisse du véhicule et la portion de plaque de support (26a) du deuxième organe de montage (26, 36) sur la caisse du véhicule étant configurées pour supporter la portion de support côté avant (18b, 20b) du bras inférieur (18, 20).

2. Structure de cadre de suspension selon la revendication 1, dans laquelle le deuxième organe de montage (26, 36) sur la caisse du véhicule comporte une portion de bride (26b) qui est formée par cintrage des deux côtés de la portion de plaque de support (26a) du deuxième organe de montage (26, 36) sur la caisse du véhicule vers un côté opposé à un côté de la portion de support côté avant (18b, 20b) du bras inférieur (18, 20).

3. Structure de cadre de suspension selon la revendication 1 ou 2, dans laquelle l'organe de montage (6, 8) sur la caisse du véhicule s'étend linéairement depuis le corps d'organe (1) vers un côté de la caisse du véhicule.

4. Structure de cadre de suspension selon la revendication 1, dans laquelle la portion de plaque de montage (24c) du premier organe de montage (24, 34) sur la caisse du véhicule et la portion de plaque de montage (26c) du deuxième organe de montage (26, 36) sur la caisse du véhicule se chevauchent mutuellement.

5. Structure de cadre de suspension selon la revendication 1, dans laquelle un organe interposé (31) est prévu entre la portion de plaque de montage (24c) du premier organe de montage (24, 34) sur la caisse du véhicule et la portion de plaque de montage (26c) du deuxième organe de montage (26, 36) sur la caisse du véhicule.
